# FASCICULE DE BREVET EUROPEEN

(11) **EP 4 532 180 B1**
(45) Date de publication et mention de la délivrance du brevet: **17.12.2025**
(21) Numéro de dépôt: 23731331.7
(22) Date de dépôt: 01.06.2023
(51) Int. Cl.: B29C 65/64, B29C 65/00, B05D 3/14, B05D 1/00, B29C 65/02, B29C 65/48, B29L 31/30, B29L 31/00

(54) **PROCÉDÉ DE FIXATION D'UNE COUCHE DE MATÉRIAU ÉLASTOMÈRE SUR UN SUBSTRAT EN ALUMINIUM**
VERFAHREN ZUM BEFESTIGEN EINER SCHICHT AUS ELASTOMEREM MATERIAL AUF EINEM ALUMINIUMSUBSTRAT
METHOD FOR FIXING A LAYER OF ELASTOMERIC MATERIAL ON AN ALUMINIUM SUBSTRATE

(30) Priorité: 02.06.2022 FR 2205333
(43) Date de publication de la demande: 09.04.2025
(73) Titulaire: Safran Aerosystems, 78370 Plaisir (FR); Centre National de la Recherche Scientifique (CNRS), 75016 Paris (FR); Université du Mans, 72000 Le Mans (FR)
(72) Inventeur: SOTO PUENTE, Jorge Arturo, 77550 MOISSY-CRAMAYEL (FR); PONCIN-EPAILLARD, Fabienne, 75016 PARIS (FR); BENYAHIA, Lazhar, 72085 LE MANS CEDEX 9 (FR); JI, Marisol, 75016 PARIS (FR); BRIAND, Valerie, 77550 MOISSY-CRAMAYEL (FR)
(74) Mandataire: Regimbeau
(86) Numéro de dépôt international: PCT/FR2023/050765
(87) Numéro de publication internationale: WO 2023/233108

(56) Documents cités:
- US-A1- 2017 154 866
- US-B2- 10 934 458
- JI MARISOL ET AL: "Characterization of functionalized coatings prepared from pulsed plasma polymerization", MATERIALS CHEMISTRY AND PHYSICS, ELSEVIER SA, SWITZERLAND, TAIWAN, REPUBLIC OF CHINA, vol. 267, 21 April 2021 (2021-04-21), XP086614793, ISSN: 0254-0584, [retrieved on 20210421], DOI: 10.1016/J.MATCHEMPHYS.2021.124621

## Description

La présente invention concerne un procédé de fixation d'une couche de matériau élastomère sur un substrat en aluminium.

Elle trouve une application notamment dans le domaine aéronautique, par exemple dans la fabrication de réservoirs de carburant ou de dégivreurs.

### ETAT DE LA TECHNIQUE

Dans des nombreux secteurs industriels, les produits fabriqués sont issus d'assemblages de matériaux incluant les élastomères. Afin d'assurer leur tenue mécanique, les substrats sur lesquels sont déposés les élastomères sont recouverts d'agents d'adhérisation.

La nécessité de performances mécaniques élevées a entraîné une complexification des procédés de dépôt de ces agents. En effet, la procédure de dépôt est souvent manuelle, comprend la mise en place répétitive d'une ou plusieurs couches adhésives et dépend des géométries complexes des pièces à assembler..

Ainsi, dans le domaine aéronautique, il est connu de fabriquer des réservoirs de carburant et des dégivreurs à partir de produits élastomères pour lesquels des collages sur des substrats métalliques, thermoplastiques et caoutchoucs vulcanisés sont nécessaires.

Dans le cas des réservoirs, ceux-ci intègrent des accessoires de natures chimiques variables qui sont assemblés par collage au reste de la paroi du produit. Ces collages doivent donc fournir une étanchéité parfaite et une résistance mécanique importante. Ainsi, à titre d'exemple, pour satisfaire à un test de crash, ces réservoirs doivent conserver leur étanchéité lors d'une chute qui a lieu depuis une hauteur normée de 15 mètres.

L'adhérence entre les accessoires et la paroi du réservoir est donc un paramètre clé pour ces assemblages.

Concernant les dégivreurs, on a affaire à des contraintes mécaniques moindres. En revanche, ces assemblages doivent résister à des variations de températures importantes en fonctionnement (cycles de dégivrage), celles-ci pouvant aller de -55°C en altitude (en absence de conditions givrantes) à des températures de l'ordre de 100°C au niveau de la résistance thermique métallique assemblée par collage.

Les contraintes sont induites par les dilatations différentielles des constituants (métal / caoutchoucs). Ces produits, du fait de leur utilisation dans un environnement extérieur à l'aéronef, sont soumis à des conditions environnementales agressives (variation de température, humidité, présence d'ozone, abrasion, etc.).

De tels assemblages sont effectués jusqu'à présent de la manière suivante : préparation de surface du substrat métallique (tel que sablage, meulage, ponçage), nettoyage, dépôt d'un primaire d'adhérisation, dépôt d'une couche de colle et enfin collage avec la couche d'élastomère.

Ces assemblages sont intégrés dans la confection du produit (réservoir ou dégivreur) qui est ensuite mis sous vide et vulcanisé en autoclave.

Les couches de primaire d'adhérisation et de colle sont généralement des phases liquides (à base aqueuse ou organiques). De ce fait, les opérateurs/opératrices sont exposés à des produits chimiques qui peuvent potentiellement être dangereux pour la santé. De plus, les directives relatives aux risques liés aux produits chimiques sont de plus en plus contraignantes et certains produits d'adhérisation sont d'ores et déjà visés par une obsolescence.

Ainsi, certains primaires d'adhérisation font usage d'alcool éthylique et d'acétate d'éthyle, qui sont tous les deux hautement inflammables, l'acétate d'éthyle étant de plus un produit irritant.

Un art antérieur d'intérêt est constitué par le document US2017/154866 et par l'article « Characterization of functionalized coatings prepared from pulsed plasma polymerization » (JI Marisol et Al /2021).

La présente invention a pour but de pallier au problème décrit plus haut et de proposer à cet effet une technique d'assemblage métal/élastomère, en l'occurrence aluminium/élastomère, qui est réalisée via la préparation du substrat par voie sèche, c'est-à-dire sans faire usage de primaires d'adhérisation ni de colle à l'interface métal/caoutchouc.

### PRESENTATION DE L'INVENTION

Ainsi, la présente invention se rapporte à un procédé de fixation d'une couche de matériau élastomère sur un substrat en aluminium, caractérisé par le fait qu'il comprend la mise en œuvre des étapes suivantes :
a) Traitement de la surface dudit substrat en aluminium de manière à la rendre rugueuse ;
b) Traitement de ladite surface à l'aide d'un plasma d'argon ;
c) Exposition de ladite surface à un plasma, en présence d'un précurseur chimique gazeux, ledit précurseur étant choisi parmi les époxydes, les acryliques, les alcènes, les alcynes et les imides, jusqu'à l'obtention d'un dépôt d'espèces chimiques d'épaisseur comprise entre 5 et 110 nanomètres ;
d) Mise en contact de ladite couche de matériau élastomère (CE) avec la surface (S) dudit substrat en aluminium ;
e) Vulcanisation de ladite couche de matériau élastomère, ladite étape c) étant mise en œuvre à basse pression, c'est-à-dire sous une pression comprise entre 10⁻² et 10⁻⁵ mbar.

Grâce à l'invention, on se dispense de l'utilisation des produits chimiques d'adhérisation en voie liquide utilisés jusqu'ici.

De plus, contrairement à l'art antérieur pour lequel on constatait des hétérogénéités dans la préparation de la surface métallique avant encollage du fait d'un procédé manuel, le procédé selon l'invention est plus simple à mettre en œuvre, notamment du fait de la réduction du nombre d'étapes et d'un gain de main d'œuvre dans la préparation des surfaces métalliques.

Par ailleurs, on constate une homogénéité du dépôt d'espèces chimiques, aussi bien en composition qu'en épaisseur, quelle que soit la géométrie de la pièce.

De plus, on gagne en épaisseur avec des dépôts plus minces (5 à 100 nm) contre 100 µm pour les primaires de l'art antérieur.

On notera également que les étapes b) et c) peuvent être réalisées en temps masqué, du fait qu'elles ne nécessitent de main d'œuvre pendant le traitement au plasma.

Enfin, le présent procédé participe à la réduction de l'empreinte environnementale de cette technique, en diminuant notamment l'utilisation de produits chimiques contraires aux normes environnementales et réglementations en vigueur ou futures.

Selon d'autres caractéristiques avantageuses et non limitatives de l'invention :
- à l'étape a), on traite ladite surface jusqu'à l'obtention d'une rugosité Ra comprise entre 2 et 20 micromètres ;
- à l'étape a), on procède audit traitement de surface par ablation au laser ou par un traitement mécanique tel qu'un grenaillage, un ponçage ou un grattage ;
- l'étape c) est mise en œuvre avec un plasma d'argon ;
- l'étape c) est mise en œuvre avec les conditions opératoires suivantes :
   - Plasma en mode pulsé ;
   - Puissance : comprise entre 5 et 600W, et préférentiellement entre 5 et 100W ;
   - Fréquence : comprise entre 5 et 50KHz, et préférentiellement entre 5 et 30 KHz ;
   - Débit de gaz argon : compris entre 5 et 50 cm³/minute et préférentiellement entre 10 et 40 cm³/minute ;
   - Durée totale : comprise entre 11 et 60 mn ;
   - Rapport cyclique (en anglais "Duty cycle") : entre 4 et 30% pour le mode pulsé, et préférentiellement entre 8 et 11%.

### DESCRIPTION DES FIGURES

D'autres caractéristiques et avantages de l'invention apparaîtront de la description qui va maintenant en être faite, en référence au dessin annexé, qui en représente, à titre indicatif mais non limitatif, un mode de réalisation possible.

Sur ces dessins :

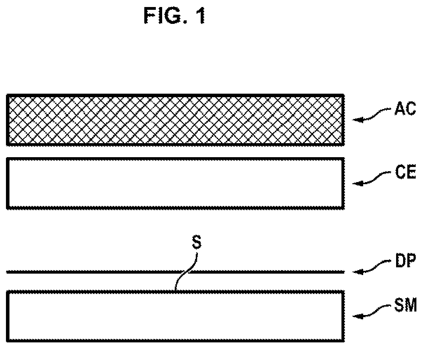

- la figure 1 est un schéma très simplifié d'un assemblage obtenu conformément au procédé selon l'invention.

### DESCRIPTION DETAILLEE DE L'INVENTION

Comme indiqué plus haut, le procédé selon l'invention comprend la mise en œuvre des étapes suivantes :
a) Traitement de la surface du substrat en aluminium de manière à la rendre rugueuse ;
b) Traitement de la surface du substrat à l'aide d'un plasma d'argon ;
c) Exposition de la surface du substrat à un plasma, notamment d'argon, en présence d'un précurseur chimique, ledit précurseur étant choisi parmi les époxydes, les acryliques, les alcènes, les alcynes et les imides, jusqu'à l'obtention d'un dépôt d'espèces chimiques d'une épaisseur comprise entre 5 et 110 nanomètres ;
d) Mise en contact de ladite couche de matériau élastomère avec la surface du substrat en aluminium ;
e) Vulcanisation de la couche de matériau élastomère.

Ci-après sont décrites chacune de ces étapes ainsi que des variantes et/ou des modes préférés de réalisation de celles-ci.

### Traitement de la surface du substrat en aluminium de manière à la rendre rugueuse.

Ce traitement a pour but de préparer la surface libre S du substrat métallique SM (voir figure 1) afin de favoriser l'ancrage ultérieur de la couche d'espèces chimiques générées au cours des étapes ultérieures de traitement plasma.

Il a pour but également de débarrasser la surface du substrat métallique de la couche habituelle de protection anti-corrosion, telle que la couche de protection par oxydation anodique sulfurique (en abrégé "OAS").

Préférentiellement, on traite la surface jusqu'à l'obtention d'une rugosité Ra comprise entre 2 et 20 micromètres.

Pour réaliser cette opération, on peut faire usage d'une ablation au laser ou recourir à un traitement mécanique visant à créer une surface rugueuse tel qu'un grenaillage, un ponçage ou un grattage.

### Traitement de la surface du substrat à l'aide d'un plasma d'argon

Ce traitement a pour but principal de débarrasser la surface S du substrat SM des oxydes qui auraient pu s'y former, et de tout polluant organique. En effet, entre l'étape précédente et celle-ci, une "ré-oxydation" a pu intervenir.

Avantageusement, ce traitement peut être mis en œuvre en respectant les paramètres suivants :
- Plasma en mode continu ;
- Puissance : 200W ;
- Débit de gaz argon : 20 cm³/minute ;
- Durée : 20 minutes.

### Exposition de ladite surface à un plasma, par exemple d'argon, en présence d'un précurseur chimique

Le précurseur permet de créer, par dépôt plasma, une couche polymère qui va permettre de compatibiliser chimiquement la surface métallique avec l'élastomère.

L'épaisseur de cette couche doit être suffisante pour permettre une inter diffusion du polymère.

Selon l'invention, ledit précurseur est choisi parmi les composés époxydes, acryliques, les alcènes, les alcynes et les imides, jusqu'à l'obtention d'un dépôt d'espèces chimiques d'épaisseur (référencé DP à la figure 1) comprise entre 5 et 110 nanomètres.

Il s'agit par exemple du gaz acétylène.

On notera qu'une épaisseur plus faible que celle indiquée plus haut induit une tenue mécanique inférieure à ce qui est requis. Et cela pourrait induire également un mauvais recouvrement du métal.

Au-delà de 110 nanomètres, aucune amélioration significative de l'adhérence n'est détectée et une couche trop épaisse pourrait provoquer une fragilisation par stress interne.

Avantageusement, cette étape est mise en œuvre avec les conditions opératoires suivantes :
- Plasma en mode pulsé ;
- Puissance : comprise entre 5 et 600W, et préférentiellement entre 5 et 100W ;
- Fréquence : comprise entre 5 et 50KHz, et préférentiellement entre 5 et 30 KHz ;
- Débit de gaz argon : compris entre 5 et 50 cm³/minute et préférentiellement entre 10 et 40 cm³/minute ;
- Durée totale : de 11 à 60 minutes ;
- Rapport cyclique (en anglais "Duty cycle") : entre 4 et 30% pour le mode pulsé, et préférentiellement entre 8 et 11%.

Ces conditions opératoires favorisent la croissance du dépôt DP, avec une inter-diffusion entre ce dépôt et la couche d'élastomère lors de l'étape ci-après.

### Mise en contact de la couche de matériau élastomère avec la surface du substrat en aluminium

Le substrat SM est ensuite utilisé pour un assemblage avec une couche d'élastomère (référencée CE à la figure 1) tel qu'un PVC-NBR (mélange de chlorure de polyvinyle et de butadiène-acrylonitrile).

Si cela s'avère nécessaire, la face de l'élastomère mise en contact aura été préalablement et avantageusement soumise à un traitement d'avivage à l'aide d'un solvant afin de conférer à cette face du "collant" avant assemblage. En d'autres termes, cette opération permet non seulement de nettoyer la face, mais également de faire gonfler l'élastomère pour favoriser la diffusion / migration vers le dépôt.

On peut aussi faire usage d'élastomères tels que les élastomères à base de polyuréthane, l'EVA (éthylène-acétate de vinyle), etc.

### Vulcanisation de la couche de matériau élastomère.

L'assemblage ainsi obtenu est par exemple placé sous vide et vulcanisé. Lors de cette étape, il s'opère un ancrage chimique qui est obtenu grâce à la réactivité du dépôt plasma DP avec l'élastomère à vulcaniser.

Une méthode alternative consiste à vulcaniser sous presse.

On peut ensuite fixer sur la surface opposée à la couche d'élastomère CE une épaisseur de matériau, tel qu'un matériau anti-crash AC.

Ce matériau anti-crash est généralement un tissu à base polyamide avec une enduction élastomère. La face enduite de ce tissu est mise en contact avec la couche avivée de l'élastomère CE de façon manuelle. Après cette mise en contact, l'assemblage est compressé à l'aide d'un rouleau cranté.

Alternativement, on peut recourir à une ou plusieurs épaisseurs de matériau renforcé par un textile ou d'autres compositions / substrats suivant les applications envisagées.

Sur la figure 1 annexée, les épaisseurs représentées ne reflètent pas la réalité.

A titre purement indicatif, ces épaisseurs sont les suivantes :
SM : inférieure à 4 millimètres ;
DP : entre 5 et 110 nanomètres ;
CE : entre 0,2 et 2 millimètres ;
AC : entre 0,1 et 10 millimètres.

Des éprouvettes d'adhérence ont été assemblées et vulcanisées en autoclave conformément au présent procédé.

Les valeurs d'adhérence obtenus en l'état sont supérieures aux requis de la norme TSO-C80 (2 N/mm).

Concernant la stabilité de l'interface métal/élastomère au contact d'un carburant, une valeur d'adhérence supérieure à 1,08 N/mm après immersion dans un mélange isooctane/toluène est constatée.

## Revendications

1. Procédé de fixation d'une couche de matériau élastomère (CE) sur un substrat en aluminium (SM), **caractérisé par le fait qu'**il comprend la mise en œuvre des étapes suivantes :
a) Traitement de la surface (S) dudit substrat en aluminium (SM) de manière à la rendre rugueuse ;
b) Traitement de ladite surface (S) à l'aide d'un plasma d'argon ;
c) Exposition de ladite surface (S) à un plasma, en présence d'un précurseur chimique gazeux, ledit précurseur étant choisi parmi les époxydes, les acryliques, les alcènes, les alcynes et les imides, jusqu'à l'obtention d'un dépôt d'espèces chimiques d'épaisseur comprise entre 5 et 110 nanomètres ;
d) Mise en contact de ladite couche de matériau élastomère (CE) avec la surface (S) dudit substrat en aluminium (SM) ;
e) Vulcanisation de ladite couche de matériau élastomère, ladite étape c) étant mise en œuvre à basse pression, c'est-à-dire sous une pression comprise entre 10⁻² et 10⁻⁵ mbar.

2. Procédé selon la revendication 1, **caractérisé par le fait que**, à l'étape a), on traite ladite surface (S) jusqu'à l'obtention d'une rugosité Ra comprise entre 2 et 20 micromètres.

3. Procédé selon l'une des revendications 1 ou 2, **caractérisé par le fait que**, à l'étape a), on procède audit traitement de surface (S) par ablation au laser ou par un traitement mécanique tel qu'un grenaillage, un ponçage ou un grattage.

4. Procédé selon l'une des revendications 1 à 3, **caractérisé par le fait que** l'étape c) est mise en œuvre avec un plasma d'argon.

5. Procédé selon l'une des revendications précédentes, **caractérisé par le fait que** ladite étape c) est mise en œuvre avec les conditions opératoires suivantes :
- Plasma en mode pulsé ;
- Puissance : comprise entre 5 et 600W, et préférentiellement entre 5 et 100W ;
- Fréquence : comprise entre 5 et 50KHz, et préférentiellement entre 5 et 30 KHz;
- Débit de gaz argon : compris entre 5 et 50 cm³/minute et préférentiellement entre 10 et 40 cm³/minute ;
- Durée totale : comprise entre 11 et 60 mn ;
- Rapport cyclique (en anglais "Duty cycle") : entre 4 et 30% pour le mode pulsé, et préférentiellement entre 8 et 11%.

## Patentansprüche

1. Verfahren zum Befestigen einer Schicht aus Elastomermaterial (CE) auf einem Aluminiumsubstrat (SM), **dadurch gekennzeichnet, dass** es die Durchführung der folgenden Schritte umfasst:
a) Behandeln der Oberfläche (S) des Aluminiumsubstrats (SM), um sie aufzurauen;
b) Behandeln der Oberfläche (S) mit einem Argonplasma;
c) Aussetzen der Oberfläche (S) einem Plasma in Gegenwart eines gasförmigen chemischen Vorläufers, wobei der Vorläufer aus den Epoxiden, den Acrylen, den Alkenen, den Alkinen und den Imiden ausgewählt ist, bis eine Ablagerung chemischer Spezies mit einer Dicke zwischen 5 und 110 Nanometern erhalten wird;
d) Inkontaktbringen der Schicht aus Elastomermaterial (CE) mit der Oberfläche (S) des Aluminiumsubstrats (SM);
e) Vulkanisieren der Schicht aus Elastomermaterial, wobei Schritt c) bei niedrigem Druck, das heißt bei einem Druck zwischen 10⁻² und 10⁻⁵ mbar, durchgeführt wird.

2. Verfahren nach Anspruch 1, **dadurch gekennzeichnet, dass** in Schritt a) die Oberfläche (S) so lange bearbeitet wird, bis eine Rauheit Ra zwischen 2 und 20 Mikrometern erreicht ist.

3. Verfahren nach einem der Ansprüche 1 oder 2, **dadurch gekennzeichnet, dass** in Schritt a) die Oberflächenbehandlung (S) durch Laserablation oder durch eine mechanische Behandlung wie Kugelstrahlen, Schleifen oder Schaben durchgeführt wird.

4. Verfahren nach einem der Ansprüche 1 bis 3, **dadurch gekennzeichnet, dass** der Schritt c) mit einem Argonplasma durchgeführt wird.

5. Verfahren nach einem der vorstehenden Ansprüche, **dadurch gekennzeichnet, dass** der Schritt c) mit den folgenden Betriebsbedingungen durchgeführt wird:
- Plasma im gepulsten Modus;
- Leistung: zwischen 5 und 600 W, und vorzugsweise zwischen 5 und 100 W;
- Frequenz: zwischen 5 und 50 kHz, und vorzugsweise zwischen 5 und 30 kHz;
- Argon-Gasdurchsatz: zwischen 5 und 50 cm³/Minute und vorzugsweise zwischen 10 und 40 cm³/Minute;
- Gesamtdauer: zwischen 11 und 60 Minuten;
- Tastverhältnis (englisch "Duty cycle"): zwischen 4 und 30% für den gepulsten Modus und vorzugsweise zwischen 8 und 11%.

## Claims

1. A method for bonding a layer of elastomeric material (CE) to an aluminum substrate (SM), **characterized in that** it comprises carrying out the following steps:
a) Treating the surface (S) of said aluminum substrate (SM) so as to roughen it;
b) Treating said surface (S) by means of an argon plasma;
c) Exposing said surface (S) to a plasma, in the presence of a gaseous chemical precursor, said precursor being chosen from the epoxides, acrylics, alkenes, alkynes and imides, until a deposit of chemical species with a thickness of between 5 and 110 nanometers is obtained;
d) Contacting said layer of elastomeric material (CE) with the surface (S) of said aluminum substrate (SM);
e) Vulcanizing said layer of elastomeric material, said step c) being carried out at low pressure, i.e. under a pressure of between 10⁻² and 10⁻⁵ mbar.

2. The method according to claim 1, **characterized in that**, in step a), said surface (S) is treated until a roughness Ra of between 2 and 20 micrometers is obtained.

3. The method according to one of claims 1 and 2, **characterized in that**, in step a), said surface treatment (S) is carried out by laser ablation or by mechanical treatment such as shot blasting, sanding or scraping.

4. The method according to one of claims 1 to 3, **characterized in that** step c) is carried out with an argon plasma.

5. The method according to one of the preceding claims, **characterized in that** said step c) is implemented with the following operating conditions:
- Plasma in pulsed mode;
- Power: comprised between 5 and 600 W, and preferably between 5 and 100 W;
- Frequency: comprised between 5 and 50 KHz, and preferably between 5 and 30 KHz;
- Argon gas flow rate: comprised between 5 and 50 cm³/minute and preferably between 10 and 40 cm³/minute;
- Total duration: comprised between 11 and 60 min;
- Duty cycle: between 4 and 30% for pulsed mode, and preferably between 8 and 11%.
